# EUROPÄISCHE PATENTSCHRIFT

(11) **EP 1 247 728 B1**
(45) Veröffentlichungstag und Bekanntmachung des Hinweises auf die Patenterteilung: **29.12.2010**
(21) Anmeldenummer: 02001738.0
(22) Anmeldetag: 25.01.2002
(51) Int. Cl.: B62D 55/104, B62D 55/24

(54) **Gummiraupenbandlaufwerk**
Rubber crawler track unit
Ensemble de roulement à chenille en caoutchouc

(30) Priorität: 04.04.2001 DE 20105852 U; 19.04.2001 DE 20106721 U
(43) Veröffentlichungstag der Anmeldung: 09.10.2002
(73) Patentinhaber: Holmer Maschinenbau GmbH, 84069 Eggmühl (DE)
(72) Erfinder: Holmer, Alfons, 84069 Eggmühl (DE)
(74) Vertreter: Graf, Helmut

(56) Entgegenhaltungen:
- DE-C- 281 920
- FR-A- 893 468

## Beschreibung

Die Erfindung bezieht sich auf ein Gummiraupenbandlaufwerk gemäß Oberbegriff Patentanspruch 1.

Ein derartiges, gefedertes und lenkbares Laufwerk ist Gegenstand der DE 200 00 737-U und eignet sich unter anderem für die Verwendung bei Fahrzeugen, die für ein Fahren auf unbefestigtem Untergrund bestimmt sind, beispielsweise für Erntefahrzeuge oder Erntemaschinen und dabei speziell auch für solche zum Ernten oder Roden von Wurzelfrüchten (Kartoffeln, Zuckerrüben usw.).

Bekannt ist ein Raupenbandlaufwerk (FR-A-893 468 A), bei dem ein eine geschlossene Schlaufe bildendes Raupenlaufband über ein Umlenkradpaar sowie über ein angetriebenes Rad geführt ist, welches ebenso wie das Umlenkradpaar und zusätzliche Abstützräder an einem Laufwerkrahmen gelagert ist. Der Laufwerkrahmen ist über seitlich von dem Raupenbandlaufwerk angeordnete gefederte Schwingen mit einem Fahrzeugrahmen verbunden.

Bekannt ist weiterhin ein Kettenlaufwerk mit einer über Kettenräder geführten angetriebenen Laufkette für Zugmaschinen (DE-C-281 920 C). Eine von wenigstens einer Schwinge und einer Feder gebildete Federanordnung zwischen einem Laufwerkrahmen und einem mit einem Fahrzeug zu verbindenden Rahmenanschlusselement ist nicht vorgesehen.

Aufgabe der Erfindung ist es, ein Gummiraupenbandlaufwerk der Eingangs erwähnten Art dahingehend zu verbessern, dass bei kompakter Bauweise eine Federbewegung des Laufwerks relativ zu dem Rahmenanschlusselement ohne eine Änderung der Achsabstände zwischen den verschiedenen Rädern des Laufwerks möglich ist.

Zur Lösung dieser Aufgabe ist ein Gummiraupenbandlaufwerk entsprechend dem Patentanspruch 1 ausgeführt.

Eine Besonderheit des Gummiraupenbandlaufwerks gemäß der Erfindung besteht darin, dass der Laufwerkrahmen mit sämtlichen Antriebsrädern, Umlenkrädern, Laufrädern usw. gefedert an dem mit dem Fahrzeugrahmen verbindbaren oder verbundenen Rahmenanschlusselement vorgesehen ist, bei der Federbewegung des Laufwerks relativ zu dem Rahmenanschlusselement also keine Änderung der Achsabstände zwischen den verschiedenen Rädern des Gummiraupenbandlaufwerks auftreten.

Bei einer bevorzugten Ausführungsform ist das Gummiraupenlaufband nur über ein Paar von Antriebsrädern und über zwei Paare von Umlenkrädern derartig geführt, dass das Gummiraupenlaufband eine in etwa dreieckförmige Schlaufe bildet. Bei kompakter Bauweise des Gummiraupenbandlaufwerks sind damit relativ große Durchmesser nicht nur für das wenigstens eine Antriebsrad, sondern auch für sämtliche Umlenkräder möglich.

Weiterhin ist es möglich, dass die Umlenkräder im Bereich der bei Vorwärtsfahrt vorderen Seite des Laufwerks vorgesehen sind.

Weiterhin ist es möglich, dass der Achsabstand der wenigstens zwei Umlenkradpaare kleiner ist als der Achsabstand zwischen den Umlenkradpaaren und dem Antriebsradpaar.

Die Umlenkräder sind jeweils paarweise vorgesehen sind und dass die Umlenkräder jedes Paares sind achsgleich angeordnet,
wobei beispielsweise die beiden Antriebsräder und/oder die Umlenkräder jedes Paares von Umlenkrädern jeweils beidseitig von einer Mittelebene des Laufwerkrahmens angeordnet sind.

Weiterhin ist es möglich, dass die Antriebsräder einen Durchmesser aufweisen, der größer ist als der Durchmesser der Umlenkräder.

Weiterhin ist es möglich, dass der Durchmesser sämtlicher Umlenkräder wenigstens gleich dem halben Durchmesser, vorzugsweise wenigstens gleich zwei Drittel des Durchmessers der Antriebsräder ist.

Weiterhin ist es möglich, dass die wenigstens eine Schwinge um die Achse des Rahmenanschlußelementes schwenkbar ist, und/oder
dass das Rahmenanschlußelement ein Rohrstück oder Querrohr ist, und/oder dass das Rahmenanschlußelement mit einem Flansch versehen ist, über den das Laufwerk an eine Achse oder einen Rahmen des Fahrzeugs anflanschbar ist.

Weiterbildungen der Erfindung sind Gegenstand der Unteransprüche. Die Erfindung wird im Folgenden anhand der Figuren an einem Ausführungsbeispiel näher erläutert. Es zeigen:
- Fig. 1: in vereinfachter Darstellung und in Seitenansicht ein lenkbares und gefedertes Gummiraupenbandlaufwerk gemäß der Erfindung;

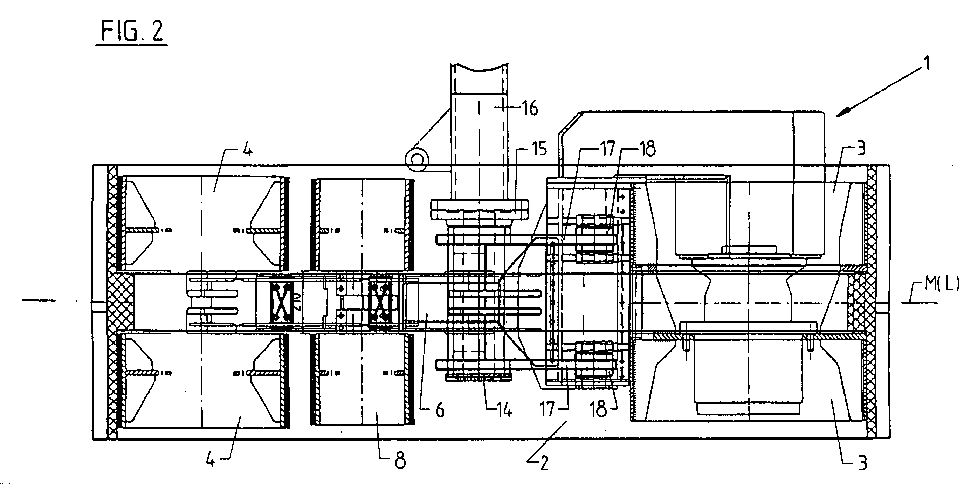

- Fig. 2: in vereinfachter Darstellung und in einem Horizontalschnitt das Laufwerk der Figur 1.

Das in den Figuren allgemein mit 1 bezeichnete Gummiraupenbandlaufwerk bildet beispielsweise zusammen mit einem weiteren Laufwerk 1 eine Achse, z.B. die vordere, lenkbare Achse einer selbstfahrenden landwirtschaftlichen Maschine, beispielsweise einer Maschine zum Ernten oder Roden von Wurzelfrüchten (Kartoffeloder Zuckerrübenerntemaschine).

Das Laufwerk 1 umfasst unter anderem das Gummiraupenlaufband 2, welches eine in sich geschlossene Schlaufe bildet und hierfür über Antriebsräder 3 und Umlenkräder 4 und 5 geführt ist.

Bei der dargestellten Ausführungsform sind zwei Antriebsräder 3, zwei Umlenkräder 4 und zwei Umlenkräder 5 vorgesehen, wobei die beiden Antriebsräder 3, die beiden Umlenkräder 4 und die beiden Umlenkräder 5 jeweils achsgleich angeordnet sind, und zwar beidseitig von einem Laufwerksrahmen 6, der sich in Längsrichtung L des Gummiraupenbandlaufwerks 1 erstreckt und als Hohl- oder Rohrrahmen ausgeführt ist, oder einer vertikalen Rahmenmittelebene M.

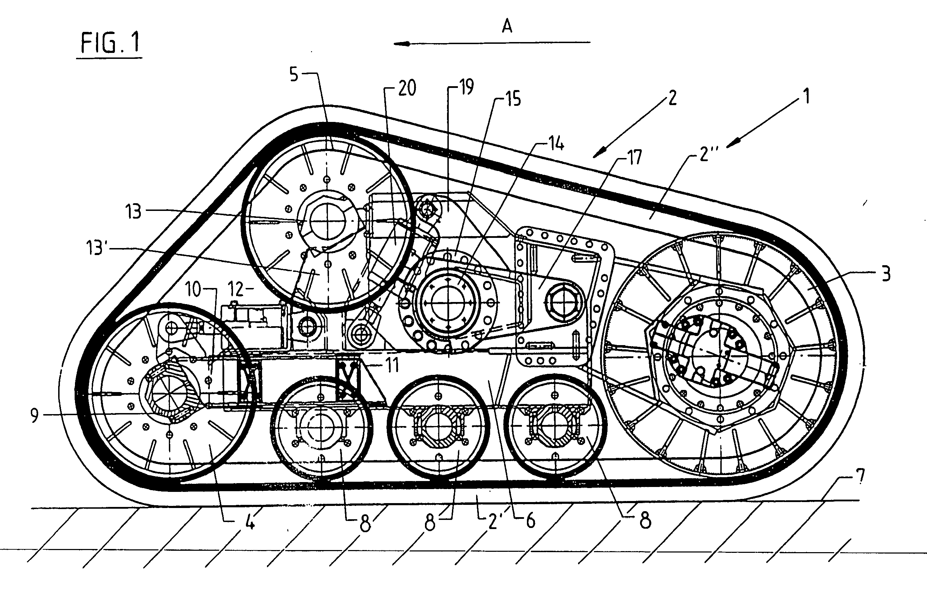

Die normale Vorwärtsfahrrichtung, die ebenfalls in Richtung der Längsachse L verläuft, ist in der Figur 1 mit A angedeutet. Bezogen auf diese Fahrtrichtung A bilden die achsgleich miteinander angeordneten Umlenkräder 4 die Vorderseite des Laufwerks 1 und die achsgleich miteinander angeordneten Antriebsräder 3 die Rückseite des Laufwerks 1, während die beiden achsgleich miteinander angeordneten Umlenkräder 5 mit ihrer Achse oberhalb der Achse der Antriebsräder 3 und Umlenkräder 4 vorgesehen ist, und zwar in Längsrichtung L den Umlenkrädern 4 näher liegend als den Antriebsrädern 3.

Es versteht sich, dass die jeweils achsgleich miteinander angeordneten Räder 3, 4 und 5 jeweils den gleichen Durchmesser aufweisen, wobei aber der Durchmesser der Antriebsräder 3 größer ist als der Durchmesser der Umlenkräder 4 bzw. 5. Bei der dargestellten Ausführungsform weisen die Umlenkräder 4 einen Durchmesser auf, der gleich dem Durchmesser der Umlenkräder 5 ist. Die Anordnung ist weiterhin so getroffen, dass das über die Räder 3 - 5 geführte Gummiraupenlaufband 2 etwa eine dreieckförmige Schlaufe bildet und die sich unmittelbar zwischen den Antriebsrädern 3 und den beiden Umlenkrädern 4 erstreckende Länge 2' des Gummiraupenlaufbandes, mit dem das Laufwerk 1 auf einen Untergrund aufsteht, im wesentlichen geradlinig in Längsrichtung L verläuft. Diese Länge 2' ist durch mehrere Laufrollen 8 abgestützt, die wiederum paarweise und achsgleich beidseitig an dem Laufwerksrahmen 6 vorgesehen und an diesem gelagert sind. Wie die Figuren zeigen, ist das Gummiraupenlaufband 2 mit einem innen liegenden, stegartigen Abschnitt 2" jeweils zwischen den paarweise angeordneten Rädern 3 - 5 geführt und damit gegen ein axiales Heruntergleiten von den Rädern 3 - 5 gesichert.

Für die beiden vorderen Umlenkräder 4 ist an sich bekannter Weise eine Spannvorrichtung vorgesehen. Diese ist dadurch gebildet, dass das Lager 9 für die beiden Umlenkräder 4 an einem Lagerträger 10 vorgesehen ist, der in Richtung der Längsachse teleskopartig im Laufwerksrahmen 6 verschiebbar geführt ist und bei der dargestellten Ausführungsform durch einen Hydraulikzylinder 12 zum Spannen des Gummiraupenlaufbandes 2 um die Räder 3 - 5 vorgespannt ist. Der Hydraulikzylinder 12 wirkt hierfür zwischen dem Laufwerksrahmen 6 und dem Träger 10 im Sinne einer Vergrößerung des Achsabstandes zwischen den Umlenkrädern 4 und den Antriebsrädern 3. Mit dem Hydraulikzylinder 12 kann der Träger 10 auch im Sinne eines Reduzierens des Achsabstandes zwischen den Umlenkrädern 4 und den Antriebsrädern 3 derart bewegt werden, dass ein Abnehmen des Gummiraupenlaufbandes 2 und/oder ein Aufsetzen eines neuen Laufbandes 2 von dem bzw. auf das Laufwerk 1 möglich ist.

Zumindest während des Betriebes des Laufwerks ist über den Hydraulikzylinder 12 die Spannkraft auf die Umlenkräder 4 und damit auf das Gummiraupenlaufband 2 so eingestellt, dass eine möglichst gleichmäßige Auflage der Länge 2' auf dem Untergrund 7 gewährleistet ist. Die Führung des Trägers 10 am Rahmen 6 ist so ausgeführt, dass dieser Träger 10 nur in vertikaler Richtung, d. h. in Richtung der Längsachse des Rahmens 6 an diesem verschiebbar ist, eine Bewegung des Trägers 10 relativ zum Rahmen 6 in Achsrichtung der Umlenkräder 4 sowie in vertikaler Richtung aber nicht möglich ist, die Achse der Umlenkräder 4 insbesondere auch nicht gegenüber dem Rahmen 6 gefedert ist.

Eine Besonderheit des Laufwerks 1 besteht weiterhin darin, dass das Lager 13 für die oberen Umlenkräder 5 ebenso wie die Lager für die Antriebsräder 3 und Laufräder 8 unmittelbar, d. h. nicht gefedert am Rahmen 6 vorgesehen ist. Das Lager 13 befindet sich an einem Lagerträger 13', der an der Oberseite des Laufwerksrahmens 6 vorgesehen ist und über diese Oberseite nach oben vorsteht.

Mit 14 ist ein Querrohr oder Rahmenanschlußelement bezeichnet, welches über einen Flansch 15 mit einer Achse 16 des ansonsten nicht dargestellten Fahrzeugs verbunden ist. Die Achse 16 ist beispielsweise Bestandteil der Lenkung des Fahrzeugs. Am Rahmenanschlußelement 14, welches mit seiner Achse in horizontaler Richtung und damit senkrecht zu der die Längsachse L einschließenden vertikalen Mittelebene M des Laufwerks 1 liegt, sind beidseitig von dem Rahmen 6 zwei Lenker 17 mit jeweils einem Ende angelenkt. Mit dem anderen Ende ist jeder Lenker 17 an einem Lager 18 am Rahmen 6 angelenkt, und zwar um eine Achse parallel zur Achse des Rahmenanschlußelementes 14. Die beiden Lager 18 sind achsgleich vorgesehen, während sich das Rahmenanschlußelement 14 etwa in der Mitte des Rahmens 6 und oberhalb dieses Rahmens befindet, sind die Lager 18 zu den Antriebsrädern 3 hin versetzt, und zwar derart, dass die Schwingen oder Lenker 17 mit ihrer Längserstreckung in etwa parallel zur Längsachse L liegen und bei Vorwärtsfahrt (Fall A) die mit den Lagern 18 verbundenen Enden der Lenker bzw. Schwingen 17 den mit dem Querrohr 14 verbundenen Enden nacheilen.

Zwischen dem Rahmen 6 und Gegenlagern 19, die drehfest mit dem Rahmenanschlußelement 14verbunden sind und von dem Rahmenanschlußelement 14 radial wegstehen, wirkt ein Federelement 20, so dass über dieses Federelement 20 und die Schwingen 17 ein Pendeln des gesamten Laufwerks 1 um die Achse des Querrohres bzw. Rahmenanschlußelementes 14 sowie zugleich auch eine vertikale Federung des gesamten Laufwerks 1 gegenüber dem Rahmenanschlußelement 14 und damit gegenüber dem Rahmen des nicht dargestellten Fahrzeugs in vertikaler Richtung möglich ist.

Der Antrieb für die Antriebsräder 3 ist beispielsweise ein hydraulischer Antrieb, ein elektrischer Antrieb oder aber ein Antrieb von dem Fahrzeugantrieb über einen geeigneten Antriebsstrang.

Dadurch, dass der Achsabstand zwischen den Umlenkrädern 4 und 5 wesentlich kleiner ist als der Achsabstand zwischen den Umlenkrädern 5 und den beiden Antriebsrädern 6, ergibt sich im vorderen Bereich des Laufwerks 1 ein relativ steiler Anstieg für das Gummiraupenlaufband 2 von den Umlenkrädern 4 zu den Umlenkrädern 5, von denen dann das Gummiraupenlaufband wesentlich flacher zu den Antriebsrädern 3 hin abfällt. Dieser Verlauf ermöglicht es dann auch, den Abstand von der Vorderachse eines Fahrzeugs und der Vorderseite des Laufwerks 1 kurz zu halten, insbesondere aber auch den Abstand den vor dem Laufwerk 1 am Fahrzeug vorgesehene Geräte, beispielsweise Rodeeinrichtungen von der Vorderseite des Fahrzeugs aufweisen so klein zu halten, dass ein Fahren auf öffentlichen Wegen und Straßen zulässig ist.

Als Feder 20 eignen sich beispielsweise mechanische oder pneumatische oder hyraulisch-pneumatische Federelemente oder Einrichtungen.

Es ist beispielsweise auch möglich, die beiden Antriebsräder 3 zu einem Antriebsrad zusammenzufassen.

### Bezugszeichenliste

- 1: Gummiraupenbandlaufwerk
- 2: Gummiraupenlaufband
- 2': Länge
- 2": Abschnitt
- 3: Antriebsrad
- 4, 5: Umlenkrad
- 6: Laufwerksrahmen
- 7: Untergrund
- 8: Laufräder
- 9: Lager
- 10: Träger
- 11: Feder
- 12: Hydraulikzylinder
- 13: Lager
- 13': Lagerträger
- 14: Querrohr oder Rahmenanschlußelement
- 15: Flansch
- 16: Fahrzeugachse
- 17: Schwinge oder Lenker
- 18: Lagerelement
- 19: Gegen lager

- A: Fahrtrichtung vorwärts
- L: Längsachse
- M: Mittelebene

## Patentansprüche

1. Gummiraupenbandlaufwerk für Fahrzeuge,
mit einem zur Lagerung von Antriebsrädern (3) und Umlenkrädern (4, 5) dienenden Laufwerkrahmen (6) sowie
mit wenigstens einem Gummiraupenlaufbandes (2), welches zur Bildung einer in sich geschlossenen Schlaufe mit einem etwa dreieckförmigen Verlauf über obere und untere Umlenkradpaare,_die jeweils von zwei achsgleich zueinander und beidseitig von einer Mittelebene (M) des Laufwerkrahmens (6) angeordneten Umlenkrädern (4, 5) gebildet sind, sowie über ein Antriebsradpaar geführt ist, das von zwei achsgleich zueinander und beidseitig von einer Mittelebene (M) des Laufwerkrahmens (6) angeordneten Antriebsrädern (3) gebildet ist,
wobei der Laufwerkrahmen (6) mittels wenigstens einer Schwinge, die mit einem Ende am Laufwerkrahmen (6) und mit dem anderen Ende an einem mit dem Fahrzeug verbindbaren Rahmenanschlusselement (14) gelagert ist sowie mittels wenigstens eines an einem Gegenlager (19), welches drehfest mit dem Rahmenanschlusselement (14) verbunden ist und radial von dem Rahmenanschlusselement (14) wegsteht, angreifenden Federelementes (20) an dem Rahmenanschlusselement (14) gefedert ist,
wobei die Schwinge (17) sowie das Federelement (20) im Gummiraupenbandlaufwerk angeordnet sind, und
wobei die Umlenkräder (5) eines Umlenkradpaares von einer die Standfläche des Laufwerk (1) bildenden jeweils unteren Länge (2') des Gummiraupenlaufbandes (2) einen größeren Abstand aufweist als die Antriebsräder (3) oder die Umlenkräder (4) eines weiteren Umlenkpaarrades, und
wobei sämtliche Umlenkräder (4) des unteren Umlenkradpaares die Antriebsräder (3), sowie auch Laufräder (8) an dem Laufwerkrahmen (6) die beide letzte ungefedert gelagert sind,
**dadurch gekennzeichnet,**
**dass** die Umlenkräder (5) auch des oberen Umlenkradpaares an dem Laufwerkrahmen (6) ungefedert gelagert sind, und dass das Federelement (20) auf den Laufwerkrahmen einwirkt.

2. Gummiraupenbandlaufwerk nach Anspruch 1, **dadurch gekennzeichnet, dass** die Umlenkräder (4, 5) im Bereich der bei Vorwärtsfahrt vorderen Seite des Laufwerks (1) vorgesehen sind.

3. Gummiraupenbandlaufwerk nach Anspruch 1 oder 2, **dadurch gekennzeichnet, dass** der Achsabstand der wenigstens zwei Umlenkräder (4, 5) kleiner ist als der Achsabstand zwischen den Umlenkrädern (4, 5) und dem wenigstens einen Antriebsrad (3).

4. Gummiraupenbandlaufwerk nach einem der vorhergehenden Ansprüche, **dadurch gekennzeichnet, dass** das wenigstens eine Antriebsrad (3) einen Durchmesser aufweist, der größer ist als der Durchmesser der Umlenkräder (4, 5).

5. Gummiraupenbandlaufwerk nach einem der vorhergehenden Ansprüche, **dadurch gekennzeichnet, dass** der Durchmesser sämtlicher Umlenkräder (4, 5) wenigstens gleich dem halben Durchmesser, vorzugsweise wenigstens gleich zwei Drittel des Durchmessers des wenigstens einen Antriebsrades (3) ist.

6. Gummiraupenbandlaufwerk nach einem der vorhergehenden Ansprüche, **dadurch gekennzeichnet, dass** die wenigstens eine Schwinge um die Achse des Rahmenanschlusselementes (14) schwenkbar ist.

7. Gummiraupenbandlaufwerk nach einem der vorhergehenden Ansprüche, **dadurch gekennzeichnet, dass** das Rahmenanschlusselement ein Rohrstück oder Querrohr ist.

8. Gummiraupenbandlaufwerk nach einem der vorhergehenden Ansprüche, **dadurch gekennzeichnet, dass** das Rahmenanschlusselement (14) mit einem Flansch (15) versehen ist, über den das Laufwerk (1) an eine Achse (16) oder einen Rahmen des Fahrzeugs anflanschbar ist.

## Claims

1. Rubber crawler track unit for motor vehicles, with a running gear frame (6) serving to support the drive wheels (3) and guide wheels (4, 5), as well as with at least one rubber crawler track (2) which to form an inherently closed loop with a roughly triangular path is guided over upper and lower guide wheel pairs, which are each formed by two guide wheels (4, 5) which are mounted coaxial with one another either side of a centre plane (M) of the running gear frame, as well as over a pair of drive wheels which is formed by two drive wheels (3) mounted coaxial with one another either side of a centre plane (M) of the running gear frame (6), wherein the running gear frame (6) is mounted with suspension on the frame connector element (14) by means of at least one rocker link which is mounted by one end on the running gear frame (6) and by the other end on a frame connector element (14) connectable with the vehicle as well as by means of at least one spring element (20) engaging on a counter bearing (19) which is connected rotationally secured to the frame connector element (14) and protrudes radially away from the frame connector element (14), wherein the rocker link (17) as well as the spring element (20) are mounted in the rubber crawler track unit, and wherein the guide wheels (5) of one guide wheel pair each have a greater distance from a lower length (2') of the rubber crawler track (2) forming the standing face of the running gear (1), than the drive wheels (3) or the guide wheels (4) of a further guide wheel pair, and wherein all the guide wheels (4) of the lower guide wheel pair, the drive wheels (3) as well as also the rollers (8) are mounted on the running gear frame (6) - the last two without spring suspension - **characterised in that** the guide wheels (5) also of the upper guide wheel pair are mounted without suspension on the running gear frame (6), and that the spring element (20) acts on the running gear frame.

2. Rubber crawler track unit according to claim 1 **characterised in that** the guide wheels (4, 5) are provided in the area of the front side of the running gear (1) seen in forward travel.

3. Rubber crawler track unit according to claim 1 or 2 **characterised in that** the axial spacing of the at least two guide wheels (4, 5) is smaller than the axial spacing between the guide wheels (4, 5) and the at least one drive wheel (3).

4. Rubber crawler track unit according to one of the preceding claims **characterised in that** the at least one drive wheel (3) has a diameter which is greater than the diameter of the guide wheels (4, 5).

5. Rubber crawler track unit according to one of the preceding claims **characterised in that** the diameter of all the guide wheels (4, 5) is at least equal to half the diameter, preferably at least equal to two thirds of the diameter, of the at least one drive wheel (3).

6. Rubber crawler track unit according to one of the preceding claims **characterised in that** the at least one rocker link is pivotal about the axis of the frame connector element (14).

7. Rubber crawler track unit according to one of the preceding claims **characterised in that** the frame connector element is a tubular member or cross tube.

8. Rubber crawler track unit according to one of the preceding claims **characterised in that** the frame connector element (14) is provided with a flange (15) by which the running gear (1) can be connected to an axle (16) or a frame of the vehicle.

## Revendications

1. Mécanisme de roulement à chenille en caoutchouc pour véhicules, comprenant :
un châssis (6) du mécanisme de roulement servant au montage de roues d'entraînement (3) et de roues de renvoi (4, 5), et
aumoins une bande de roulement à chenille en caoutchouc (2), qui est guidée pour former une boucle refermée sur elle-même avec un tracé approximativement triangulaire via des paires de roues de renvoi supérieure et inférieure, qui sont formées respectivement de deux roues de renvoi (4, 5) agencées dans le même axe l'une par rapport à l'autre et de part et d'autre d'un plan central (M) du châssis (6) du mécanisme de roulement, et d'une paire de roues d'entraînement, qui est formée de deux roues d'entraînement (3) agencées dans le même axe l'une par rapport à l'autre et de part et d'autre d'un plan central (M) du châssis (6) du mécanisme de roulement,
dans lequel le châssis (6) du mécanisme de roulement est suspendu élastiquement à un élément (14) de raccordement au châssis au moyen d'au moins un élément oscillant, qui est monté, à une extrémité, sur le châssis (6) du mécanisme de roulement et, à l'autre extrémité, sur l'élément (14) de raccordement au châssis raccordable au véhicule ainsi qu'au moyen d'au moins un élément élastique (20) s'appliquant sur un palier-support (19), qui est raccordé de manière solidaire en rotation à l'élément (14) de raccordement au châssis et s'écarte radialement de l'élément (14) de raccordement au châssis,
dans lequel l'élément oscillant (17) et l'élément élastique (20) sont agencés dans le mécanisme de roulement à chenille en caoutchouc, et
dans lequel les roues de renvoi (5) d'une paire de roues de renvoi présente une distance d'une longueur respectivement inférieure (2'), formant la surface d'appui du mécanisme de roulement (1), de la bande de roulement à chenille en caoutchouc (2), supérieure à celle des roues d'entraînement (3) ou des roues de renvoi (4) d'une autre roue de la paire de renvoi, et
dans lequel toutes les roues de renvoi (4) de la paire de roues de renvoi inférieure - les deux dernières non suspendues élastiquement -, les roues d'entraînement (3) et également les roues de roulement (8) sont montées - les deux dernières non suspendues élastiquement - sur le châssis (6) du mécanisme de roulement,
**caractérisé en ce que**
les roues de renvoi (5), également de la paire de roues de renvoi supérieure, sont montées non suspendues élastiquement sur le châssis (6) du mécanisme de roulement et l'élément élastique (20) agit sur le châssis du mécanisme de roulement.

2. Mécanisme de roulement à chenille en caoutchouc selon la revendication 1, **caractérisé en ce que** les roues de renvoi (4, 5) sont prévues dans la zone du côté avant du mécanisme de roulement (1) en déplacement en avant.

3. Mécanisme de roulement à chenille en caoutchouc selon la revendication 1 ou 2, **caractérisé en ce que** la distance axiale des au moins deux roues de renvoi (4, 5) est inférieure à la distance axiale entre les roues de renvoi (4, 5) et la au moins une roue d'entraînement (3).

4. Mécanisme de roulement à chenille en caoutchouc selon l'une quelconque des revendications précédentes, **caractérisé en ce que** la au moins une roue d'entraînement (3) présente un diamètre qui est supérieur à celui des roues de renvoi (4, 5).

5. Mécanisme de roulement à chenille en caoutchouc selon l'une quelconque des revendications précédentes, **caractérisé en ce que** le diamètre de toutes les roues de renvoi (4, 5) est au moins identique au demi-diamètre, de préférence au moins identique aux deux tiers du diamètre de la au moins une roue d'entraînement (3).

6. Mécanisme de roulement à chenille en caoutchouc selon l'une quelconque des revendications précédentes, **caractérisé en ce que** le au moins un élément oscillant peut pivoter autour de l'axe de l'élément (14) de raccordement au châssis.

7. Mécanisme de roulement à chenille en caoutchouc selon l'une quelconque des revendications précédentes, **caractérisé en ce que** l'élément de raccordement au châssis est une pièce tubulaire ou un tube transversal.

8. Mécanisme de roulement à chenille en caoutchouc selon l'une quelconque des revendications précédentes, **caractérisé en ce que** l'élément (14) de raccordement au châssis est pourvu d'une bride (15), par laquelle le mécanisme de roulement (1) peut être bridé sur un essieu (16) ou un châssis du véhicule.
